# EUROPEAN PATENT APPLICATION

(11) **EP 4 672 412 A1**
(43) Date of publication of application: **31.12.2025**
(21) Application number: 25184361.1
(22) Date of filing: 23.06.2025
(51) Int. Cl.: H01M 10/0567, H01M 10/0568, H01M 10/0569, H01M 10/42

(54) **BATTERY**

(30) Priority: 26.06.2024 CN 202410838985
(71) Applicant: Zhuhai CosMX Battery Co., Ltd., Zhuhai, Guangdong 519180 (CN)
(72) Inventor: QIU, Yaming, Zhuhai, 519180 (CN); CHEN, Xiaofeng, Zhuhai, 519180 (CN); WANG, Hai, Zhuhai, 519180 (CN)
(74) Representative: Murgitroyd & Company

(57) **Abstract**

The present disclosure relates to the field of batteries, and specifically to a battery. The battery includes an electrolyte solution, the electrolyte solution includes ethyl butyrate, and a mass content of the ethyl butyrate in the electrolyte solution is c₁; the battery includes an electrode assembly, the electrode assembly includes a positive electrode plate, a negative electrode plate, and a separator, and a thickness of the electrode assembly is a, in unit of mm; and a and c₁ satisfy 0 < c₁/a ≤ 0.25. The battery of the present disclosure improves safety performance under fast charging conditions.

## Description

### TECHNICAL FIELD

The present disclosure relates to the field of battery technologies, and specifically to a battery.

### BACKGROUND

With the transformation of the global energy structure and the increasing awareness of environmental protection, the utilization of clean energy and renewable energy has become a global focus. Lithium-ion battery, with its advantages such as high energy density, long cycle life, and low self-discharge rate, has been widely used in electric vehicles, mobile devices, energy storage systems, and other fields. However, lithium-ion battery has frequently caused fire and explosion accidents under fast charging conditions, posing a serious threat to people's lives and property safety. The safety issues under fast charging conditions are key factors limiting its further development.

Therefore, there is an urgent need to improve the safety performance of lithium-ion battery under fast charging conditions.

### SUMMARY

The purpose of the present disclosure is to overcome the safety issues of lithium-ion battery under fast charging conditions existing in the conventional technology and to provide a battery. The battery of the present disclosure improves its safety performance under fast charging conditions by optimizing electrolyte solution and the battery structure.

In related technologies, lithium-ion battery has a certain potential safety hazard under fast charging conditions. It has been found that the cause of the above problems is that under fast charging conditions, the migration speed of lithium ions is faster; compared to the slower migration speed, more heat is generated at this time. If lithium ions encounter greater resistance during the migration process or the migration distance becomes longer, it will exacerbate the generation of heat, leading to the occurrence of thermal runaway. Moreover, the thickness of the battery will directly affect the internal spatial layout of the battery. Although thicker batteries can increase capacity, when the battery is thicker, it not only increases the transmission distance of lithium ions in the electrolyte solution, making it difficult to dissipate heat, further exacerbating the occurrence of battery thermal runaway; it also causes the electrodes to dry out and crack during the charge-discharge cycle process of the battery, further deteriorating the safety performance of the battery. Based on the above findings, the following solution was proposed:

The present disclosure provides a battery, the battery includes an electrolyte solution, where the electrolyte solution includes ethyl butyrate, a mass content of the ethyl butyrate in the electrolyte solution is c₁; the battery further includes an electrode assembly, the electrode assembly includes a positive electrode plate, a negative electrode plate, and a separator, a thickness of the electrode assembly is a, in unit of mm; and a and c₁ satisfy 0 < c₁/a ≤ 0.25.

Since the interaction forces between the groups in the molecular structure of ethyl butyrate are small and it has polarity, ethyl butyrate has a small viscosity and a high dielectric constant. When the electrolyte solution includes ethyl butyrate, it can effectively reduce the viscosity of the electrolyte solution , increase the conductivity of the electrolyte solution , reducing the resistance of lithium ions transmission process in the electrolyte solution, and can control the heat generated during the migration process of lithium ions to a certain extent. Moreover, ethyl butyrate has good wettability to the electrode, not only maintaining the wet state of the electrode surface well, thereby reducing the drying and cracking of the electrode during the battery charge-discharge cycle process; it can also more effectively wet the interior of the electrode, fully contact with active material, thereby improving the charge transfer efficiency inside the battery, making the electrode expand/contract more uniformly during the charge-discharge cycle process of the battery, and the structural stress inside the electrode is effectively dispersed and alleviated, thereby reducing the risk of cracks and fractures in the electrode. When the mass content of the ethyl butyrate in the electrolyte solution and the thickness of the electrode assembly are within a specific range, the two are compatible, by adjusting the ratio of c₁ and a, the migration resistance and distance of lithium ions can be reduced to a certain extent, thereby reducing the heat generated, delaying the occurrence of thermal runaway; and it can reduce the drying and cracking of the electrode, further improving the safety performance of the battery.

Through the above technical solutions, the present disclosure has at least the following advantages compared with the conventional technology: the battery of the present disclosure improves the safety performance under fast charging conditions by controlling the ratio of the mass content of the ethyl butyrate in the electrolyte solution and the thickness of the electrode assembly.

The endpoints of the ranges and any values disclosed in this specification are not limited to the precise ranges or values, and these ranges or values should be understood to include values close to these ranges or values. For numerical range, the endpoint values of each range, the endpoint values of each range and individual point values, as well as individual point values, can be combined to obtain one or more new numerical range, which should be considered as specifically disclosed in this specification.

### BRIEF DESCRIPTION OF THE DRAWINGS

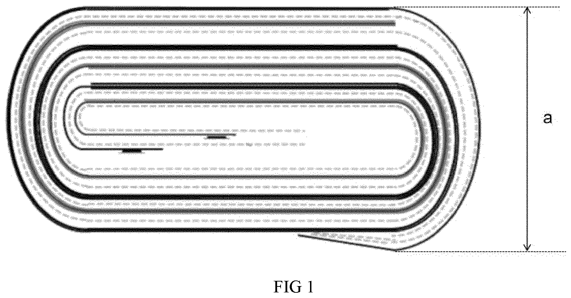

FiG. 1 shows a schematic diagram of a thickness of the electrode assembly in an example of the present disclosure.

### DETAILED DESCRIPTION OF THE EMBODIMENTS

The detailed descriptions of the embodiments of the present disclosure will be described in detail below. It should be understood that the specific embodiments described herein are only for illustrating and explaining the present disclosure, and are not intended to limit the present disclosure.

The present disclosure provides a battery, the battery may include an electrolyte solution, where the electrolyte solution may include ethyl butyrate. A mass content of the ethyl butyrate in the electrolyte solution is c₁. The battery may also include an electrode assembly, and the electrode assembly may include a positive electrode plate, a negative electrode plate, and a separator. A thickness of the electrode assembly is a, in unit of mm; and a and c₁ may satisfy 0 < c₁/a ≤ 0.25, for example, c₁/a is 0.001, 0.002, 0.003, 0.004, 0.005, 0.006, 0.007, 0.008, 0.009, 0.01, 0.02, 0.03, 0.04, 0.05, 0.06, 0.07, 0.08, 0.09, 0.1, 0.15, 0.2 or 0.25.

In one example, 0.04 ≤ c₁/a ≤ 0.2.

In one example, 0.06 < c₁/a ≤ 0.14.

In the present disclosure, c₁ may range from 1% to 90%, for example, 1%, 5%, 10%, 15%, 20%, 25%, 30%, 35%, 40%, 45%, 50%, 55%, 60%, 65%, 70%, 75%, 80%, 85% or 90%.

In one example, c₁ may range from 40% to 60%.

When the mass content of the ethyl butyrate in the electrolyte solution is too small (for example, less than 1%), it cannot effectively exert its advantages of low viscosity and high dielectric constant, thus failing to ensure the safety performance of the battery under fast charging conditions; when the mass content of the ethyl butyrate in the electrolyte solution is too large (for example, greater than 90%), the content of other components in the electrolyte solution is affect seriously, led to a decrease in the energy density of the battery, a decline in the charge-discharge performance, and a reduction in the cycle life.

In the present disclosure, the mass content of the ethyl butyrate in the electrolyte solution c₁ can be tested by conventional methods in the field, such as Gas Chromatography (GC).

In the present disclosure, a may range from 2 to 20, in unit of mm, for example, 2, 3, 4, 5, 6, 7, 8, 9, 10, 11, 12, 13, 14, 15, 16, 17, 18, 19 or 20.

In one example, a ranges from 3 to 10, in unit of mm.

When the thickness of the electrode assembly is within a specific range, the migration distance of lithium ions can be appropriate, and it will not increase impedance and accelerate the thermal runaway of the battery due to excessive migration distance. Moreover, since the battery undergoes volume expansion during the charge-discharge cycle process, when the thickness of the electrode assembly is too large (for example, greater than 20 mm), it will increase the risk of cracks and fractures inside the positive/negative electrode plate, thus affecting its cycle life; when the thickness of the electrode assembly is too small (for example, less than 2 mm), it will result in lower battery capacity and energy density. When the thickness of the electrode assembly is within a specific range, it can balance energy density, cycle life, and safety performance under fast charging conditions.

In the present disclosure, the thickness of the electrode assembly has the conventional meaning in the field. As shown in FIG. 1, it shows a schematic diagram of a thickness of the electrode assembly in an example of the present disclosure.

In the present disclosure, the electrolyte solution may further include an additive, and the additive may include a substance shown in Formula I.

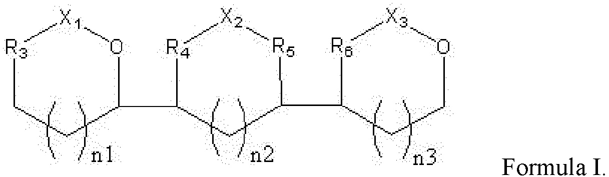

Where n1, n2, and n3 may each independently be selected from 0 or 1. X₁, X₂, and X₃ may each independently be selected from 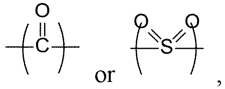 and at least one of X₁, X₂, and X₃ is 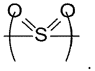 R₃, R₄, R₅, and R₆ may each independently be selected from -CH₂- or -O-, and at least one of R₅ and R₆ is -O-.

It has been found that the ethyl butyrate undergoes side reaction with the negative electrode plate, thereby affecting the cycling performance of the battery; while the additive can form a protective film with low impedance and high thermal stability on the surface of the negative electrode plate, which can reduce the direct contact between the negative electrode plate and the electrolyte solution, the risk of the ethyl butyrate aunergoing side reaction with the negative electrode plate has been reduced. Therefore, the combined use of the ethyl butyrate and the additive improves the cycling performance of the battery. Moreover, the combined use of the ethyl butyrate and the additive can further enhance the safety performance of the battery under fast charging conditions, because during the charge-discharge cycle process of the battery, an electric field exists inside the battery, which exerts a force on the substances within the battery, thereby affecting their interactions. The ethyl butyrate has a high dielectric constant, and the electric dipole moment it forms has a strong shielding effect on the electric field, enabling the ethyl butyrate and the additive to form a stable solvation layer. Through the solvation effect, it can control the distribution and migration behavior of ions in the electrolyte solution, thereby reducing the transport resistance of lithium ions in the electrolyte solution, improving the electrochemical reaction kinetics inside the battery, enhancing the charge-discharge performance, and improving the safety performance of the battery under fast charging conditions. At the same time the solvation layer can also reduce the decomposition and volatilization of the electrolyte solution, helping to maintain the stability of the electrolyte solution, ensuring that the battery can maintain stable performance during long-term use, and improving the cycling performance of the battery.

In the present disclosure, the additive may include at least one of

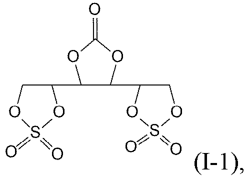

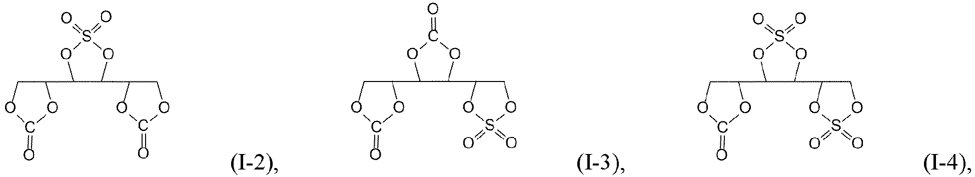

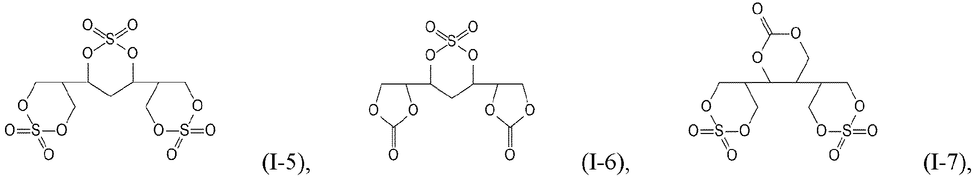

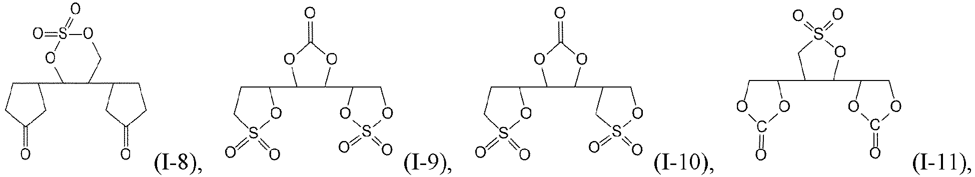

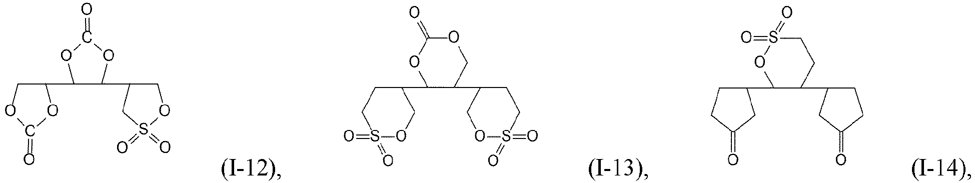

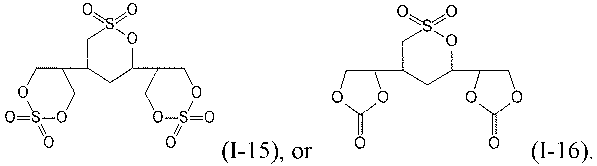

In one example, the additive includes at least one of

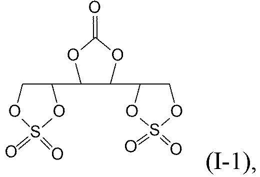

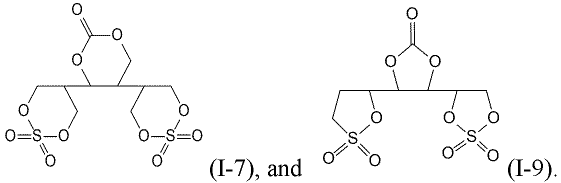

In one example, the additive includes

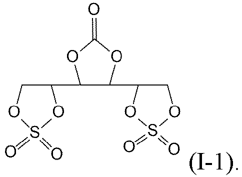

In one example, the additive includes

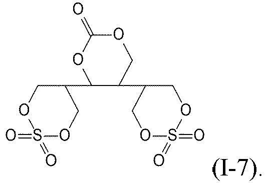

In one example, the additive includes

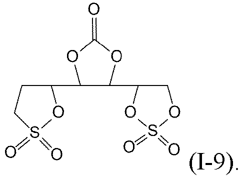

In the present disclosure, a mass content of the additive in the electrolyte solution is c₂. c₁ and c₂ may satisfy 0.2 ≤ c₂ + c₁^{1/3} ≤ 0.95, for example, c₂ + c₁^{1/3} is 0.2, 0.3, 0.4, 0.5, 0.6, 0.7, 0.8, 0.9, or 0.95.

In one example, 0.7 ≤ c₂ + c₁^{1/3} ≤ 0.9.

It has been found that when the mass content of the ethyl butyrate in the electrolyte solution and the mass content of the additive in the electrolyte solution satisfy a specific relationship, the solvation layer they produce is more stable, further improving the cycling performance of the battery and the safety performance under fast charging conditions.

In the present disclosure, c₂ may range from 0.1% to 5%, for example, 0.1%, 0.2%, 0.3%, 0.4%, 0.5%, 0.6%, 0.7%, 0.8%, 0.9%, 1%, 1.5%, 2%, 2.5%, 3%, 3.5%, 4%, 4.5%, or 5%.

In one example, c₂ ranges from 0.5% to 3%.

When the mass content of the additive in the electrolyte solution is too small (for example, less than 0.1%), it cannot effectively protect the negative electrode plate; when the mass content of additive in electrolyte solution is too large (for example, greater than 5%), the thickness of the protective film formed by the additive on the surface of the negative electrode plate is too large, which increases the interface impedance, increases the migration resistance of lithium ions, and increases heat generation.

In the present disclosure, the mass content of the additive in the electrolyte solution c₂ can be tested by conventional methods in the field, such as GC.

In the present disclosure, a electrolyte retention coefficient of the battery may range from 1.3 g/Ah to 1.7 g/Ah, for example, 1.3 g/Ah, 1.4 g/Ah, 1.5 g/Ah, 1.6 g/Ah, or 1.7 g/Ah.

In one example, the electrolyte retention coefficient of the battery ranges from 1.5 g/Ah to 1.7 g/Ah.

In one example, the electrolyte retention coefficient of the battery ranges from 1.55 g/Ah to 1.65 g/Ah.

The electrolyte retention coefficient of the battery is an important parameter describing the ability of the electrolyte solution retention, which reflects the degree of retention and distribution state of the electrolyte solution on the electrode material during the use of the battery. When the electrolyte retention coefficient of the battery is too low (for example, below 1.3 g/Ah), leading to an increase in the lithium ion concentration on the surface of the electrode, resulting in a corresponding increase in current density, which accelerates the occurrence of side reactions on the electrode, causing gas generation inside the battery; and a low electrolyte retention coefficient can result in incomplete electrochemical reaction, leading to the accumulation of intermediate products, which in turn generates gas, ultimately causing excessive internal pressure in the battery, battery swelling, and affecting the cycling performance of the battery. When the electrolyte retention coefficient of the battery is too high (for example, above 1.7 g/Ah), it not only increases the risk of battery leakage, causing safety issues; but also increases the complexity of the internal chemical reactions of the battery, leading to unnecessary side reactions, affecting the cycling performance of the battery. The electrolyte solution in the battery of the present disclosure includes the ethyl butyrate, and the ethyl butyrate has good wettability to both the positive/negative electrode plate, and its viscosity is small with good fluidity, which can reduce the accumulation and loss of the electrolyte solution on the surface of the positive/negative electrode plate. The additive can form a uniform and dense protective film on the surface of the negative electrode plate, which not only enhances the interface stability between the negative electrode plate and the electrolyte solution but also prevents the leakage and volatilization of the electrolyte solution, ensuring the internal humidity of the battery. Through the combined action of the ethyl butyrate and the additive to give the battery of the present disclosure a relatively suitable electrolyte retention coefficient, ensuring the internal humidity and stability of the battery, improving gas generation and swelling of the battery, and enhancing cycling performance.

In the present disclosure, the electrolyte retention coefficient of the battery can be tested by conventional methods in the field, specifically as follows:
(1) Testing the battery capacity.
(2) Disassembling the battery, pouring out the free electrolyte solution, weighing, and recording it as M1.
(3) Using dimethyl carbonate with total mass of M to extract the battery (including the electrode assembly and housing) three times.
(4) After pouring out dimethyl carbonate from the battery, weighing, and recording it as M3; and weighing the poured out dimethyl carbonate, and recording it as M2.
(5) Putting the battery into an oven, weighing the battery after baking, and recording it as M4, then the mass of the electrolyte solution in the battery is M1+M2+M3-M4-M, and the electrolyte retention coefficient of the battery is the ratio of the mass of the electrolyte solution to the battery capacity.

The method for testing the battery capacity is as follows: in an environment of 25°C ± 5°C, discharging the battery to 3.0 V at a current of 100 mA, letting it stand for 10 minutes, then charging the battery to 4.53 V at a current of 250 mA, with a cut-off current of 25 mA, letting it stand for 10 minutes, then discharging the battery to 3.0 V at a current of 250 mA, and recording the discharge capacity of the battery as the battery capacity.

In the present disclosure, the electrolyte solution may also include a nitrile compound, a carbonate ester compound, and a sulfonic acid compound. The nitrile compound may include at least one of benzonitrile, p-tolunitrile, 3,5-difluorobenzonitrile, adiponitrile, succinonitrile, ethylene glycol bis(propionitrile) ether, 1,3,6-hexanetricarbonitrile, 1,2,6-hexane trinitrile, or 1,2,3-tris(2-cyanoethoxy)propane. The carbonate ester compound may include at least one of vinylene carbonate and fluoroethylene carbonate (FEC). The sulfonic acid compound may include at least one of 1,3-propane sultone, 5-methyloxathiolane-2,2-dioxide, 1-propene 1,3-sultone, 2,4-butane sultone, 1,4-butane sultone, 1,3-butane sultone, or fluoro-1,3-propanesultone.

In an example, the nitrile compound includes at least one of adiponitrile, succinonitrile, or 1,3,6-hexanetricarbonitrile.

In an example, the carbonate ester compound includes FEC.

In an example, the carbonate ester compound includes a combination of FEC and vinylene carbonate. A mass ratio of the FEC to the vinylene carbonate may be (15 - 18):1, for example, 15:1, 16:1, 17:1, or 18:1.

In an example, the sulfonic acid compound include at least one of 1,3-propane sultone, 1-propene 1,3-sultone, or fluoro-1,3-propanesultone.

The nitrile compound can complex and coordination on the surface of the positive electrode plate, and protect the positive electrode plate. The carbonate ester compound can be reduced on the surface of the negative electrode to form a protective film. And the sulfonic acid compound can enhance the protective effect on the negative electrode plate.

In the present disclosure, a mass content of the nitrile compound in the electrolyte solution is c₃; a mass content of the carbonate ester compound in the electrolyte solution is c₄; a mass content of the sulfonic acid compound in the electrolyte solution is c₅; and c₃, c₄, and c₅ may satisfy c₃ ≤ c₄ + c₅ ≤ 20%.

It has been found that when the mass contents of the nitrile compound, the carbonate ester compound, and the sulfonic acid compound in the electrolyte solution satisfy a specific relationship, the battery's cycling performance can be further improved. The reason is that the nitrile compound can prevent the dissolution of the positive electrode metal ion during cycling through complexation on the positive electrode, enhancing the structural stability of the positive electrode and reducing the degradation of electrochemical performance caused by dissolved metal ion. However, the nitrile compound is not compatible with the negative electrode, and it is necessary to strengthen the protection of the negative electrode to reduce the adverse effects of the nitrile compound on the negative electrode. Therefore, when the contents of the three satisfy a specific relationship, the carbonate ester compound and the sulfonic acid compound can effectively protect the negative electrode to prevent damage from the nitrile compound. However, excessive content of the carbonate ester compound and the sulfonic acid compound increases the risk of battery gas production. When the contents of the two are within a specific range, it cannot exacerbate the risk of battery gas production.

In the present disclosure, c₃ may range from 1% to 5%, for example, 1%, 2%, 3%, 4%, or 5%.

In an example, c₃ ranges from 1% to 3%.

In the present disclosure, the mass content of the nitrile compound in the electrolyte solution c₃ can be tested by conventional methods in the field, such as GC.

In the present disclosure, c₄ may range from 5% to 20%, for example, 5%, 6%, 7%, 8%, 9%, 10%, 11%, 12%, 13%, 14%, 15%, 16%, 17%, 18%, 19%, or 20%.

In an example, c₄ ranges from 10% to 15%.

In the present disclosure, the mass content of the carbonate ester compound in the electrolyte solution c₄ can be tested by conventional methods in the field, such as GC.

In the present disclosure, c₅ may range from 0.1% to 5%, for example, 0.1%, 0.2%, 0.3%, 0.4%, 0.5%, 0.6%, 0.7%, 0.8%, 0.9%, 1%, 1.5%, 2%, 2.5%, 3%, 3.5%, 4%, 4.5% or 5%.

In an example, c₅ ranges from 0.5% to 3%.

In the present disclosure, the mass content of the sulfonic acid compound in the electrolyte solution c₅ can be tested by conventional methods in the field, such as GC.

In the present disclosure, c₁, c₃, c₄, and c₅ may satisfy c₃ + c₅ + c₅ ≤ 0.5 × c₁.

It has been found that when c₁, c₃, c₄, and c₅ satisfy a specific relationship, the safety performance of the battery under fast charging conditions can be further improved. The reason may be that: the nitrile compound, the carbonate ester compound, and the sulfonic acid compound can form a protective film on the surface of the electrode, but when the content of the three is excessive, the thickness of the formed protective film is thicker, which increases the migration resistance of lithium ions; while the ethyl butyrate can reduce the migration resistance of lithium ions. When the four satisfy a specific relationship, the ethyl butyrate can offset the increased migration resistance of lithium ions caused by the nitrile compound, the carbonate ester compound, and the sulfonic acid compound, allowing the nitrile compound, the carbonate ester compound, and the sulfonic acid compound to effectively protect the electrode without increasing the migration resistance of lithium ions.

In the present disclosure, the electrolyte solution may also include a lithium salt. And the lithium salt may include at least one of lithium hexafluorophosphate (LiPF₆), lithium bis(trifluoromethanesulphonyl)imide, or lithium bis(fluorosulfonyl)imide.

In the present disclosure, the electrolyte solution may also include an organic solvent, and the organic solvent may include at least one of ethylene carbonate (EC), propylene carbonate (PC), diethyl carbonate (DEC), propyl propionate (PP), ethyl propionate (EP), dimethyl carbonate (DMC), or ethyl methyl carbonate (EMC).

In the present disclosure, the negative electrode plate may include a negative electrode active material layer, and a mass content of silicon in the negative electrode active material layer may range from 0.5% to 85%, for example, 0.5%, 1%, 5%, 10%, 15%, 20%, 25%, 30%, 35%, 40%, 45%, 50%, 55%, 60%, 65%, 70%, 75%, 80% or 85%.

In an example, the mass content of silicon in the negative electrode active material layer ranges from 1% to 50%.

Due to the significant volume change of the silicon-doped negative electrode during the battery charge-discharge cycle process, it is easy to cause poor contact between the electrolyte solution and the negative electrode and degradation of battery performance. The ethyl butyrate, due to its high dielectric constant and low viscosity, can make the electrolyte solution have better kinetic performance, improving the transfer efficiency of lithium ions. Even when the silicon-doped negative electrode has a large volume change, it can maintain good ion channels, ensuring the stable operation of the battery including the silicon-doped negative electrode. Therefore, the electrolyte solution of the present disclosure has good compatibility with the silicon-doped negative electrode.

In the present disclosure, the mass content of silicon in the negative electrode active material layer can be tested by conventional methods in the field, such as Atomic Absorption Spectroscopy (AAS).

In the present disclosure, the negative electrode plate may include a negative electrode current collector and the negative electrode active material layer located on at least one side of the negative electrode current collector. The negative electrode active material layer may include a negative electrode active material, a negative electrode conductive agent, and a negative electrode binder. The negative electrode active material may include a silicon-based material. The silicon-based material may include at least one of nano silicon, silicon alloy, silicon oxygen (SiOx, 0 < x < 2), or silicon carbon. The silicon carbon refers to a composite material including element silicon and element carbon. The negative electrode active material may further include a carbon-based material. The carbon-based material may include at least one of artificial graphite, natural graphite, mesocarbon microbead, soft carbon, or hard carbon. The negative electrode conductive agent may include at least one of conductive carbon black, acetylene black, Keqin black, conductive graphite, carbon nanotube, or carbon fiber. The negative electrode binder may include at least one of polyvinylidene fluoride (PVDF), sodium carboxymethyl cellulose, styrene-butadiene rubber, polytetrafluoroethylene, or polyoxyethylene.

In the present disclosure, based on a total mass of the negative electrode active material layer, a content of the negative electrode active material may range from 80% to 99.8% (for example, 80%, 82%, 84%, 86%, 88%, 90%, 92%, 94%, 96%, 98%, 99%, or 99.8%), a content of the negative electrode conductive agent may range from 0.1% to 10% (for example, 10%, 9%, 8%, 7%, 6%, 5%, 4%, 3%, 2%, 1%, 0.5%, or 0.1%), and a content of the negative electrode binder may range from 0.1% to 10% (for example, 10%, 9%, 8%, 7%, 6%, 5%, 4%, 3%, 2%, 1%, 0.5%, or 0.1%).

In the present disclosure, a thickness of the negative electrode plate may range from 30 µm to 200 µm, for example, 30 µm, 40 µm, 50 µm, 60 µm, 70 µm, 80 µm, 90 µm, 100 µm, 150 µm, or 200 µm.

In the present disclosure, the positive electrode plate may include a positive electrode current collector and a positive electrode active material layer located on at least one surface of the positive electrode current collector. The positive electrode active material layer may include positive electrode active material, positive electrode conductive agent, and positive electrode binder. The positive electrode active material may include at least one of lithium cobaltate, lithium nickel cobalt manganese oxide, lithium nickel cobalt aluminum oxide, lithium nickel cobalt manganese aluminum oxide, lithium manganate, lithium nickel manganese oxide, lithium nickel oxide, lithium iron phosphate oxide, lithium manganese iron phosphate oxide, lithium vanadium phosphate, or lithium-rich manganese-based material. The positive electrode conductive agent may include at least one of conductive carbon black, acetylene black, Keqin black, conductive graphite, carbon fiber, or carbon nanotube. The positive electrode binder may include at least one of PVDF, sodium carboxymethyl cellulose, styrene-butadiene rubber, polytetrafluoroethylene, or polyoxyethylene.

In the present disclosure, based on a total mass of the positive electrode active material layer, a content of the positive electrode active material may range from 80% to 99.8% (for example, 80%, 82%, 84%, 86%, 88%, 90%, 92%, 94%, 96%, 98%, 99%, or 99.8%), a content of the positive electrode conductive agent may range from 0.1% to 10% (for example, 10%, 9%, 8%, 7%, 6%, 5%, 4%, 3%, 2%, 1%, 0.5%, or 0.1%), and a content of the positive electrode binder may range from 0.1% to 10% (for example, 10%, 9%, 8%, 7%, 6%, 5%, 4%, 3%, 2%, 1%, 0.5%, or 0.1%).

In the present disclosure, a thickness of the positive electrode plate may range from 30 µm to 200 µm, for example, 30 µm, 40 µm, 50 µm, 60 µm, 70 µm, 80 µm, 90 µm, 100 µm, 150 µm, or 200 µm.

In the present disclosure, the separator may include separator conventionally used in the field, for example, at least one of polyethylene film or polypropylene film. A thickness of the separator may range from 4 µm to 30 µm, for example, 4 µm, 5 µm, 10 µm, 15 µm, 20 µm, 25 µm, or 30 µm.

The technical solutions in the embodiments of the present disclosure will be clearly and completely described below with reference to the drawings in the embodiments of the present disclosure. It is obvious that the described embodiments are only a part of the embodiments of the present disclosure, not all of them. Based on the embodiments of the present disclosure, all other embodiments obtained by those of ordinary skill in the art without creative efforts fall within the protection scope of the present disclosure.

In the following examples, unless otherwise specified, the materials used are all commercially available analytical grade.

The following Example is used to illustrate the battery of the present disclosure.

### Example 1

Preparing the battery according to the following method:

### (1) Preparation of a positive electrode plate

Lithium cobaltate, PVDF, conductive carbon black (super P), and carbon nanotube were mixed in a mass ratio of 96:2:1.5:0.5, N-methylpyrrolidone (NMP) was added, stirring was performed under action of a vacuum mixer until a mixture became a positive electrode slurry with uniform fluidity; the positive electrode slurry was evenly applied on both surfaces of an aluminum foil; followed by dring, roll-pressing, and cutting to obtain the positive electrode plate.

### (2) Preparation of a negative electrode plate

A negative electrode active material (a combination of artificial graphite and silicon carbon, where a mass ratio of artificial graphite to silicon carbon was 3:1), sodium carboxymethyl cellulose, styrene-butadiene rubber, conductive carbon black (super P), and carbon nanotube were mixed in a mass ratio of 94.5:2.5:1.5:1:0.5, deionized water was added, stirring was performed under action of a vacuum mixer until a mixture became a negative electrode slurry with uniform fluidity; the negative electrode slurry was evenly applied on both surfaces of a copper foil; and the coated copper foil was dried under room temperature, and then transferred to an 80°C oven for drying for 10h, followed by cold pressing and cutting to obtain the negative electrode plate, where a mass content of silicon in the negative electrode active material layer was about 20%.

### (3) Preparation of an electrolyte solution

EC, PC, and DEC were mixed in a mass ratio of 1:2:2 uniformly in an argon-filled glove box (H₂O < 0.1 ppm, O₂ < 0.1 ppm) to obtain a mixed solvent; then, fully dried LiPF₆ that accounted for 14% of a total mass of the electrolyte solution was quickly added into the mixed solvent; ethyl butyrate (specific amount was shown in Table 1) and a additive (specific substance and amount were shown in Table 1) were added, a nitrile compound compound, a carbonate ester compound, and a sulfonic acid compound (specific substance and amount were shown in Table 1) were added, then stirred uniformly, after passing moisture content and free acid tests, the electrolyte solution was obtained, where c₃ ≤ c₄ + c₅ ≤ 20%, c₃ + c₄ + c₅ ≤ 0.5 × c₁.

### (4) Preparation of a battery

The positive electrode plate prepared in step (1), the negative electrode plate prepared in step (2) and a separator (polyethylene film with a thickness of 12 µm) were layered in an order of the positive electrode plate, the separator, and the negative electrode plate, then winded to obtain an electrode assembly (with a thickness of 7 mm); the electrode assembly was placed in outer packaging aluminum foil, and the electrolyte solution prepared in step (3) was injected into the outer packaging, followed by processes such as vacuum packaging, standing, formation, shaping, and sorting, to obtained the battery, where c₁/a was 0.071, and the battery's electrolyte retention coefficient was 1.58 g/Ah.

### Example 2

This example was referred Example 1 for the process, the differences were to change the composition of the electrolyte solution in step (3) and the thickness of the electrode assembly a, the specific composition of the electrolyte solution was shown in Table 1, and the thickness of the electrode assembly a was 3 mm, where c₁/a was 0.133, and the electrolyte retention coefficient of the battery was 1.55 g/Ah.

### Example 3

This example was referred Example 1 for the process, the differences were to change the composition of the electrolyte solution in step (3) and the thickness of the electrode assembly a, the specific composition of the electrolyte solution was shown in Table 1, and the thickness of the electrode assembly a was 10 mm, where c₁/a was 0.06, and the electrolyte retention coefficient of the battery was 1.63 g/Ah.

### Example Group 4

This Example Group was used to verify the impact of changes in "the mass content of ethyl butyrate in the electrolyte solution c₁".

This Example Group was referred Example 1 for the process, the difference lied in the change of c₁, specifically as follows:

Example 4a, c₁ was 1%, where c₁/a was 0.001, c₃ + c₄ + c₅ > 0.5 × c₁, and the electrolyte retention coefficient of the battery was 1.41 g/Ah;

Example 4b, c₁ was 5%, where c₁/a was 0.007, c₃ + c₄ + c₅ > 0.5 × c₁, and the electrolyte retention coefficient of the battery was 1.45 g/Ah.

### Example Group 5

This Example Group was used to verify the impact of changes in "the additive".

This Example Group was referred Example 1 for the process, the difference lied in the change of the additive, specifically as follows:

Example 5a, the additive was replaced from I-1 with the same mass of I-7, where the electrolyte retention coefficient of the battery was 1.56 g/Ah;

Example 5b, the additive was replaced from I-1 with the same mass of I-9, where the electrolyte retention coefficient of the battery was was 1.57 g/Ah;

Example 5c, the additive was replaced from I-1 with the same mass of I-5, where the electrolyte retention coefficient of the battery was 1.52 g/Ah;

Example 5d, the additive was replaced from I-1 with the same mass of I-15, where the electrolyte retention coefficient of the battery was 1.52 g/Ah.

### Example Group 6

This Example Group was used to verify the impact of the change in "the mass content of the additive in the electrolyte solution c₂".

This Example Group was referred Example 1 for the process, the difference lied in the change of c₂, specifically as follows:

Example 6a, c₂ was 0.1%, where the electrolyte retention coefficient of the battery was 1.49 g/Ah;

Example 6b, c₂ was 5%, where the electrolyte retention coefficient of the battery was 1.61 g/Ah.

### Example Group 7

This Example Group was used to verify the impact of the change in "the mass content of the nitrile compound in the electrolyte solution c₃".

This Example Group was referred Example 1 for the process, the difference lied in the change of c₃, as detailed in Table 1.

### Example Group 8

This Example Group was used to verify the impact of the change in "the carbonate ester compound".

This Example Group was referred Example 1 for the process, the difference lied in the change of the carbonate ester compound, specifically as follows:

Example 8a, the carbonate ester compound was replaced from FEC to a combination of FEC and vinylene carbonate with the same mass, where a mass ratio of FEC to vinylene carbonate was 15:1;

Example 8b, the carbonate ester compound was replaced from FEC to a combination of FEC and vinylene carbonate with the same mass, where a mass ratio of FEC to vinylene carbonate was 17:1;

Example 8c, the carbonate ester compound was replaced from FEC to a combination of FEC and vinylene carbonate with the same mass, where a mass ratio of FEC to vinylene carbonate was 18:1.

### Example Group 9

This Example Group was used to verify the impact of the change in "the mass content of the carbonate ester compound in the electrolyte solution c₄".

This Example Group was referred Example 1 for the process, the difference lied in the change of c₄, specifically as follows:

Example 9a, c₄ was 5%;

Example 9b, c₄ was 20%, where c₄ + c₅ > 20%, and the electrolyte retention coefficient of the battery is 1.56 g/Ah.

### Example Group 10

This Example Group was used to verify the impact of the change in "the mass content of the sulfonic acid compound in the electrolyte solution c₅".

This Example Group was referred Example 1 for the process, the difference lied in the change of c₅, as detailed in Table 1.

### Example Group 11

This Example Group was used to verify the impact of changes in "the thickness of the electrode assembly a".

This Example Group was referred Example 1 for the process, the difference lied in the change of a, specifically as follows:

Example11 a, the thickness of the electrode assembly a was 2 mm, c1/a was 0.25;

Example11 b, the thickness of the electrode assembly a was 20 mm, c1/a was 0.025.

### Example Group 12

This Example Group was used to verify the impact of changes in "c₁/a".

This Example Group was referred Example 1 for the process, the difference lied in the change of c₁/a by altering the thickness of the electrode assembly a and c1, specifically as follows:

Example 12a, a was 10 mm, c₁ was 40%, c₁/a was 0.04;

Example 12b, a was 3 mm, c₁ was 60%, c₁/a was 0.2.

### Example Group 13

This Example Group was used to verify the impact of changes in "the mass content of silicon in the negative electrode active material layer".

This Example Group was referred Example 1 for the process, with the difference lied in the change in the mass content of silicon in the negative electrode active material layer by altering the mass content of artificial graphite and mass content of silicon carbon in the negative electrode active material, specifically as follows:

Example 13a, the mass content of silicon in the negative electrode active material layer was approximately 1%;

Example 13b, the mass content of silicon in the negative electrode active material layer was approximately 50%;

Example 13c, the mass content of silicon in the negative electrode active material layer was 0;

Example 13d, the mass content of silicon in the negative electrode active material layer was approximately 85%.

### Example 14

This Example was used to verify the impact of changes in "c₃ + c₄ + c₅ ≤ 0.5 × c₁".

This Example was referred Example 1 for the process, the difference lied in the change in the composition of the electrolyte solution, as detailed in Table 1, where c₁/a was 0.057, c₃ + c₄ + c₅ > 0.5 × c₁, and electrolyte retention coefficient of the battery was 1.55 g/Ah.

### Example Group 15

This Example Group was used to verify the impact of changes in "jelly roll or stacked cell".

This Example Group referred Examples 1-3 for the process, the difference lied in step (4), specifically as follows:

Example 15a, conducted with reference to Example 1, the positive electrode plate, the separator, and the negative electrode plate were sequential stacked to obtain the electrode assembly, where the separator was positioned between the positive electrode plate and the negative electrode plate to serve as an isolation layer;

Example 15b, conducted with reference to Example 2, the positive electrode plate, the separator, and the negative electrode plate were sequential stacked to obtain the electrode assembly, where the separator was positioned between the positive electrode plate and the negative electrode plate to serve as an isolation layer;

Example 15c, conducted with reference to Example 3, the positive electrode plate, separator, and the negative electrode plate were sequential stacked to obtain the electrode assembly, where the separator was positioned between the positive electrode plate and the negative electrode plate to serve as an isolation layer.

All the above Examples satisfied the thickness of the negative electrode plate was ranged from 30 µm to 200 µm, and the thickness of the positive electrode plate was ranged from 30 µm to 200 µm.

### Comparative Example 1

This Comparative Example was referred Example 1 for the process, the difference was the replacement of ethyl butyrate with the same mass of

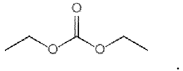

### Comparative Example 2

This Comparative Example was referred Example 1 for the process,1, the difference was the alteration of the thicknesses of the electrode assembly a and c₁, as detailed below: a was 2 mm, c₁ was 60%, and c₁/a was 0.3.

### Comparative Example3

This Comparative Example was referred Example 16a for the process, the difference was the alteration of the thicknesses of the electrode assembly a and c₁, as detailed below: a was 2 mm, c₁ was 60%, and c₁/a was 0.3.

**Table 1**

| | The mass content of ethyl butyrate c₁ | The additive | | The nitrile compound | | The carbonate ester compound | | The sulfonic acid compound | | c₂ + c₁^{1/3} |
|---|---|---|---|---|---|---|---|---|---|---|
| | | Substances | c₂ | Substances | c₃ | Substances | c₄ | Substances | c₅ | |
| Example 1 | 50% | I-1 | 2% | adiponitrile | 2% | FEC | 12% | 1,3-propane sultone | 2% | 0.81 |
| Example 2 | 40% | I-1 | 0.5% | succinonitrile | 1% | FEC | 10% | 1-propene | 0.5% | 0.74 |
| | | | | | | | | 1,3-sultone | | |
| Example 3 | 60% | I-1 | 3% | 1,3,6-hexanetricarbonitrile | 3% | FEC | 15% | fluoro-1,3-propanesultone | 3% | 0.87 |
| Example 4a | 1% | * | * | * | * | * | * | * | * | 0.24 |
| Example 4b | 5% | * | * | * | * | * | * | * | * | 0.39 |
| Example 5a | * | I-7 | * | * | * | * | * | * | * | * |
| Example 5b | * | I-9 | * | * | * | * | * | * | * | * |
| Example 5c | * | I-5 | * | * | * | * | * | * | * | * |
| Example 5d | * | I-15 | * | * | * | * | * | * | * | * |
| Example 6a | * | * | 0.1% | * | * | * | * | * | * | 0.79 |
| Example 6b | * | * | 5% | * | * | * | * | * | * | 0.84 |
| Example 7a | * | * | * | * | 1% | * | * | * | * | * |
| Example 7b | * | * | * | * | 5% | * | * | * | * | * |
| Example 8a | * | * | * | * | * | The mass ratio of FEC to vinylene carbonate was 15:1 | * | * | * | * |
| Example 8b | * | * | * | * | * | The mass ratio of FEC to vinylene carbonate was 17:1 | * | * | * | * |
| Example 8c | * | * | * | * | * | The mass ratio of FEC to vinylene carbonate was 18:1 | * | * | * | * |
| Example 9a | * | * | * | * | * | * | 5% | * | * | * |
| Example 9b | * | * | * | * | * | * | 20% | * | * | * |
| Example 10a | * | * | * | * | * | * | * | * | 0.1% | * |
| Example 10b | * | * | * | * | * | * | * | * | 5% | * |
| Example 11a | * | * | * | * | * | * | * | * | * | * |
| Example 11b | * | * | * | * | * | * | * | * | * | * |
| Example 12a | 40% | * | * | * | * | * | * | * | * | 0.76 |
| Example 12b | 60% | * | * | * | * | * | * | * | * | 0.86 |
| Example 13a | * | * | * | * | * | * | * | * | * | * |
| Example 13b | * | * | * | * | * | * | * | * | * | * |
| Example 13c | * | * | * | * | * | * | * | * | * | * |
| Example 13d | * | * | * | * | * | * | * | * | * | * |
| Example 14 | 40% | * | * | * | 3% | * | 15% | * | 3% | 0.76 |
| Example 15a | * | * | * | * | * | * | * | * | * | * |
| Example 15b | * | * | * | * | * | * | * | * | * | * |
| Example 15c | * | * | * | * | * | * | * | * | * | * |

| | | | | | | | | | | |
|---|---|---|---|---|---|---|---|---|---|---|
| Note: The "*" in Table 1 indicates that the value in this Example is the same as that in the referenced Example. | | | | | | | | | | |

### Test Example

### (1) 1 C cycle test at 25°C

The batteries prepared from Examples and Comparative Examples were charged at 25°C with a constant current of 1 C until a voltage reached 4.53 V, then charged at a constant voltage of 4.53 V until a current reached to 0.05 C, left standing for 5 minutes, and then discharged with a constant current of 1 C until a voltage reached to 3.0 V, which constituted one charge-discharge cycle; a discharge capacity of the first cycle was recorded as x1 mAh, and a discharge capacity of the 500^{th} cycle was recorded as y1 mAh; a cycle capacity retention of the 500^{th} cycle R1 was obtained by dividing the capacity of the 500^{th} cycle by the capacity of the first cycle, R1 = y1/x1, and the results were recorded in Table 2.

### (2) 4 C cycle test at 25°C

The batteries prepared from Examples and Comparative Examples were charged at 25°C with a constant current of 4 C until a voltage reached 4.53 V , then charged at a constant voltage of 4.53 V until a current reached 0.05 C, left standing for 5 minutes, and then discharged with a constant current of 4 C until a voltage reached 3.0 V, which constituted one charge-discharge cycle. A discharge capacity of the first cycle was recorded as x2 mAh, and a discharge capacity of the 500^{th} cycle was recorded as y2 mAh; a cycle capacity retention of the 500^{th} cycle R2 was obtained by dividing the capacity of the 500^{th} cycle by the capacity of the first cycle, R2 = y2/x2, and the results were recorded in Table 2.

### (3) Hot Box Test

The batteries prepared from Examples and Comparative Examples were charged at room temperature (25°C) with a constant current of 4 C until a voltage reached 4.53 V, left standing for 60 minutes, inspected for appearance of the batteries, and photographed; then heated to 132°C ± 2°C at a rate of 3 °C/min ± 2 °C/min and maintained for 60 minutes; observed the batteries, if there were no leakage, no smoke, no fire, and no explosion, it was recorded as passing the test; 10 samples each of Examples and Comparative Examples were tested, and the results were recorded in Table 2.

**Table 2**

| | 1 C cycle capacity retention at 25°C | 4 C cycle capacity retention at 25°C | Hot Box Test |
|---|---|---|---|
| Example 1 | 96.6% | 90.2% | 10/10 |
| Example 2 | 96.1% | 89.5% | 10/10 |
| Example 3 | 96.4% | 89.9% | 10/10 |
| Example 4a | 89.3% | 82.6% | 8/10 |
| Example 4b | 89.8% | 83.1% | 9/10 |
| Example 5a | 96.0% | 89.6% | 10/10 |
| Example 5b | 96.1% | 89.8% | 10/10 |
| Example 5c | 94.1% | 87.9% | 9/10 |
| Example 5d | 93.9% | 87.7% | 9/10 |
| Example 6a | 92.5% | 88.1% | 7/10 |
| Example 6b | 91.8% | 87.7% | 9/10 |
| Example 7a | 92.1% | 87.8% | 8/10 |
| Example7b | 91.4% | 86.6% | 10/10 |
| Example 8a | 96.0% | 89.6% | 10/10 |
| Example 8b | 95.9% | 89.4% | 10/10 |
| Example 8c | 96.2% | 89.8% | 10/10 |
| Example 9a | 94.8% | 88.4% | 10/10 |
| Example 9b | 94.2% | 87.6% | 10/10 |
| Example 10a | 93.8% | 87.9% | 10/10 |
| Example 10b | 94.0% | 88.1% | 10/10 |
| Example 11a | 93.5% | 87.4% | 10/10 |
| Example 11b | 92.3% | 86.1% | 8/10 |
| Example 12a | 94.8% | 88.9% | 10/10 |
| Example 12b | 95.6% | 89.2% | 10/10 |
| Example 13a | 96.4% | 89.9% | 10/10 |
| Example 13b | 92.4% | 86.6% | 10/10 |
| Example 13c | 97.1% | 90.6% | 10/10 |
| Example 13d | 89.2% | 82.6% | 8/10 |
| Example 14 | 93.6% | 87.9% | 6/10 |
| Example 15a | 96.2% | 89.4% | 10/10 |
| Example 15b | 95.6% | 89.1% | 10/10 |
| Example 15c | 95.3% | 88.9% | 10/10 |
| Comparative Example 1 | 82.3% | 75.5% | 0/10 |
| Comparative Example 2 | 85.8% | 78.9% | 3/10 |
| Comparative Example 3 | 87.8% | 81.6% | 2/10 |

| | | | |
|---|---|---|---|
| Note: The pass rate of the hot box test in Table 2, "10/10" indicated that 10 out of 10 samples passed the test, "8/10" indicated that 8 out of 10 samples passed the test, and so on. | | | |

As can be seen from Table 2, the battery of the present disclosure improves safety performance under fast charging conditions compared to Comparative Examples. In Example 13c, since the mass content of silicon in the negative electrode active material layer is 0, compared to Example 1, the cycle capacity retention slightly increases, which is due to silicon accompanying volume expansion during the battery charge-discharge cycle process, which affects the cycling performance of the battery to a certain extent.

The preferred embodiments of the present disclosure have been described in detail above, but the present disclosure is not limited to these. Within the technical concept of the present disclosure, various simple modifications can be made to the technical solutions of the present disclosure, including combining various technical features in any other suitable manner. These simple modifications and combinations should also be considered as disclosed by the present disclosure and fall within the protection scope of the present disclosure.

## Claims

1. A battery, **characterized by** comprising an electrolyte solution, wherein the electrolyte solution comprises ethyl butyrate, and a mass content of the ethyl butyrate in the electrolyte solution is c₁; and
the battery further comprises an electrode assembly, the electrode assembly comprises a positive electrode plate, a negative electrode plate, and a separator, a thickness of the electrode assembly is a, in unit of mm; and a and c₁ satisfy 0 < c₁/a ≤ 0.25.

2. The battery according to claim 1, **characterized in that** 0.04 ≤ c₁/a ≤ 0.2;
preferably, 0.06 ≤ c₁/a ≤ 0.14.

3. The battery according to claim 1 or 2, **characterized in that** c₁ ranges from 1% to 90%; preferably, c₁ ranges from 40% to 60%; and/or
a ranges from 2 to 20, in unit of mm; preferably, a ranges from 3 to 10, in unit of mm.

4. The battery according to any one of claims 1 to 3, **characterized in that** the electrolyte solution further comprises an additive, and the additive comprises a substance shown in Formula I: 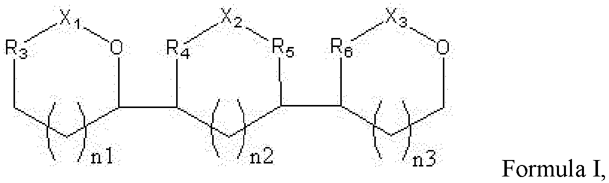
wherein, n1, n2, and n3 are each independently selected from 0 or 1, X₁, X₂, and X₃ are each independently selected from 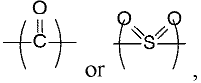 and at least one of X₁, X₂, and X₃ is 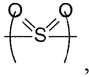 R₃, R₄, R₅, and R₆ are each independently selected from -CH₂- or -O-, and at least one of R₅ and R₆ is -O-;
preferably, the additive comprises at least one of 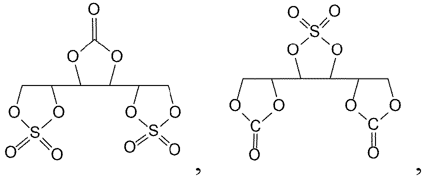 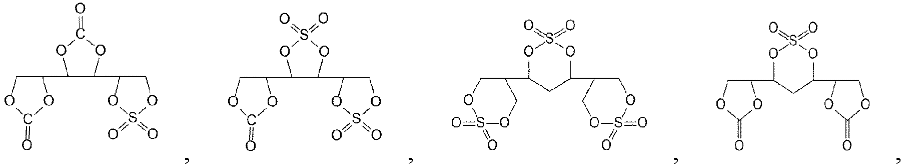 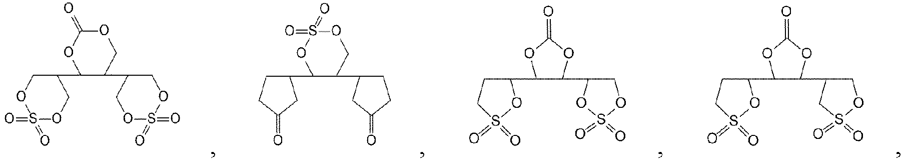 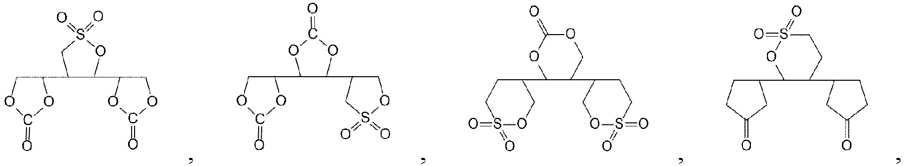 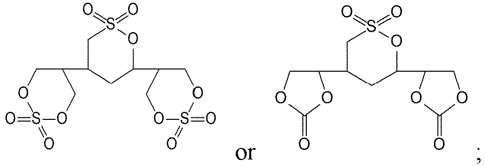
more preferably, the additive comprises at least one of

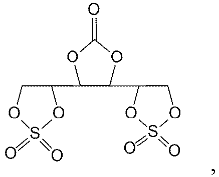

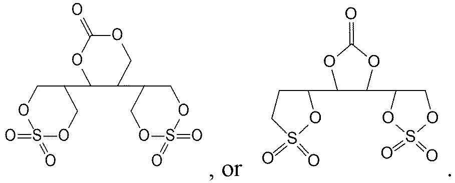

5. The battery according to claim 4, **characterized in that** a mass content of the additive in the electrolyte solution is c₂; and c₁ and c₂ satisfy 0.2 ≤ c₂ + c₁^{1/3} ≤ 0.95;
preferably, 0.7 ≤ c₂ + c₁^{1/3} ≤ 0.9;
preferably, c₂ ranges from 0.1% to 5%; more preferably, c₂ ranges from 0.5% to 3%.

6. The battery according to any one of claims 1 to 5, **characterized in that** a electrolyte retention coefficient of the battery ranges from 1.3 g/Ah to 1.7 g/Ah;
preferably, the electrolyte retention coefficient of the battery ranges from 1.5 g/Ah to 1.7 g/Ah;
more preferably, the electrolyte retention coefficient of the battery ranges from1.55 g/Ah to 1.65 g/Ah.

7. The battery according to any one of claims 1 to 6, **characterized in that** the electrolyte solution further comprises a nitrile compound, a carbonate ester compound, and a sulfonic acid compound;
preferably, the nitrile compound comprises at least one of benzonitrile, p-tolunitrile, 3,5-difluorobenzonitrile, adiponitrile, succinonitrile, ethylene glycol bis(propionitrile) ether, 1,3,6-hexanetricarbonitrile, 1,2,6-hexane trinitrile, or 1,2,3-tris(2-cyanoethoxy)propane;
preferably, the carbonate ester compound comprises at least one of vinylene carbonate or fluoroethylene carbonate;
preferably, the sulfonic acid compound comprises at least one of 1,3-propane sultone, 5-methyloxathiolane 2,2-dioxide, 1-propene 1,3-sultone, 2,4-butane sultone, 1,4-butane sultone, 1,3-butane sultone, or fluoro-1,3-propanesultone.

8. The battery according to claim 7, **characterized in that** the nitrile compound includes at least one of adiponitrile, succinonitrile, or 1,3,6-hexanetricarbonitrile; and/or
the sulfonic acid compound include at least one of 1,3-propane sultone, 1-propene 1,3-sultone, or fluoro-1,3-propanesultone.

9. The battery according to claim 7 or 8, **characterized in that** the carbonate ester compound comprises a combination of the fluoroethylene carbonate and the vinylene carbonate;
preferably, a mass ratio of the fluoroethylene carbonate to the vinylene carbonate is (15 - 18):1.

10. The battery according to any one of claims 7 to 9, **characterized in that** a mass content of the nitrile compound in the electrolyte solution is c₃, a mass content of the carbonate ester compound in the electrolyte solution is c₄, a mass content of the sulfonic acid compound in the electrolyte solution is c₅; and c₃, c₄, and c₅ satisfy c₃ ≤ c₄ + c₅ ≤ 20%.

11. The battery according to claim 10, **characterized in that** c₃ ranges from 1% to 5%; preferably, c₃ ranges from 1% to 3%; and/or
c₄ ranges from 5% to 20%; preferably, c₄ ranges from 10% to 15%; and/or
c₅ ranges from 0.1% to 5%; preferably, c₅ ranges from 0.5% to 3%.

12. The battery according to any one of claims 7 to 11, **characterized in that** a mass content of the nitrile compound in the electrolyte solution is c₃, a mass content of the carbonate ester compound in the electrolyte solution is c₄, a mass content of the sulfonic acid compound in the electrolyte solution is c₅; and c₁, c₃, c₄ and c₅ satisfy c₃ + c₄ + c₅ ≤ 5 × c₁.

13. The battery according to any one of claims 1 to 12, **characterized in that** the electrolyte solution further comprises a lithium salt, and the lithium salt comprises at least one of lithium hexafluorophosphate, lithium bis(trifluoromethanesulphonyl)imide, or lithium bis(fluorosulfonyl)imide; and/or
the electrolyte solution further comprises an organic solvent, and the organic solvent comprises at least one of ethylene carbonate, propylene carbonate, diethyl carbonate, propyl propionate, ethyl propionate, dimethyl carbonate, or ethyl methyl carbonate.

14. The battery according to any one of claims 1 to 13, **characterized in that** the negative electrode plate comprises a negative electrode active material layer, and a mass content of silicon in the negative electrode active material layer ranges from 0.5% to 85%;
preferably, the mass content of silicon in the negative electrode active material layer ranges from 1% to 50%.

15. The battery according to any one of claims 1 to 14, **characterized in that** a thickness of the negative electrode plate ranges from 30 µm to 200 µm; and/or
a thickness of the positive electrode plate ranges from 30 µm to 200 µm.
